# EUROPÄISCHE PATENTSCHRIFT

(11) **EP 3 214 804 B1**
(45) Veröffentlichungstag und Bekanntmachung des Hinweises auf die Patenterteilung: **26.09.2018**
(21) Anmeldenummer: 17158304.0
(22) Anmeldetag: 28.02.2017
(51) Int. Cl.: H04L 12/417

(54) **VERFAHREN ZUM ZUVERLÄSSIGEN TRANSPORT VON ALARMNACHRICHTEN IN EINEM VERTEILTEN COMPUTERSYSTEM**
METHOD FOR SECURE TRANSPORT OF ALARM DATA IN A DISTRIBUTED COMPUTER SYSTEM
PROCÉDÉ POUR TRASPORT SÉCURISÉ DE DONNÉES DANS UN SYSTÈME DISTRIBUÉ D'ORDINATEURS

(30) Priorität: 01.03.2016 AT 501582016
(43) Veröffentlichungstag der Anmeldung: 06.09.2017
(73) Patentinhaber: TTTech Computertechnik AG, 1040 Wien (AT)
(72) Erfinder: Kopetz, Hermann, 2500 Baden (AT)
(74) Vertreter: Patentanwaltskanzlei Matschnig & Forsthuber OG

(56) Entgegenhaltungen:
- WO-A1-2015/164897
- DE-A1-102012 004 854
- US-A1- 2013 142 204
- US-A1- 2015 043 360

## Beschreibung

Die Erfindung betrifft ein Verfahren zum zuverlässigen Transport von Alarmnachrichten in einem verteilten Computersystem, welches Computersystem Komponenten, insbesondere eine Vielzahl von Komponenten, umfasst, wobei es sich bei den Komponenten um Knotenrechner, Verteilereinheiten, Sensoren, vorzugsweise intelligente Sensoren und Aktuatoren, vorzugsweise intelligente Aktuatoren handelt, und wobei alle Komponenten Zugriff auf eine *globale Zeit* bekannter Präzision haben, und wobei die Knotenrechner, intelligenten Sensoren und intelligenten Aktuatoren über die Verteilereinheiten Nachrichten austauschen.

Weiters betrifft die Erfindung ein Verteiltes Computersystem, welches Computersystem Komponenten, insbesondere eine Vielzahl von Komponenten, umfasst, wobei es sich bei den Komponenten um Knotenrechner, Verteilereinheiten, Sensoren, vorzugsweise intelligente Sensoren und Aktuatoren, intelligente Aktuatoren handelt, und wobei alle Komponenten Zugriff auf eine *globale Zeit* bekannter Präzision haben, und wobei die Knotenrechner, intelligenten Sensoren und intelligenten Aktuatoren über die Verteilereinheiten Nachrichten austauschen.

Die Erfindung liegt im Bereich der Computertechnik. Sie betrifft ein Verfahren und ein Computersystem zum zuverlässigen Transport von Alarm Nachrichten in einem verteilten Echtzeitcomputersystem von intelligenten Alarmsensoren zu einer Alarmzentrale.

In einer großen industriellen Anlage wird eine Vielzahl von möglichen Alarmen, das sind *Informationen über Anomalien oder Fehler,* durch die vorhandene Instrumentierung erfasst. Auftretende Alarme müssen zuverlässig und schnell vom verteilten Echtzeitcomputersystem in Alarmnachrichten zu einer Alarmzentrale transportiert werden, um nach einer eingehenden Analyse die Ursache der Alarme lokalisieren und geeignete Maßnahmen zur Fehlerbehandlung einleiten zu können, siehe dazu auch die Offenlegungsschrift DE 10 2012 004 854 A1.

Ein verteiltes Echtzeitcomputersystem besteht aus einer Vielzahl von Komponenten, d.s. Knotenrechnern, Verteilereinheiten und intelligenten Sensoren/Aktuatoren.

Wir bezeichnen einen intelligenten Sensor, der ein Alarmereignis erfassen kann, als einen *intelligenten Alarmsensor.* Es wird vorausgesetzt, dass alle Komponenten, d.h. auch alle Alarmsensoren, Zugriff auf eine *globale Zeit* bekannter Präzision haben.

Die funktionelle Zusammenfassung eines physikalischen Sensors mit einem Knotenrechner bezeichnet man als *intelligenten Sensor.* Auf dem Markt werden intelligente Sensoren häufig als kompakte Baueinheiten mit einer Schnittstelle zu einem standardisierten Echtzeitkommunikationssystem angeboten.

Die funktionelle Zusammenfassung eines physikalischen Aktuators mit einem Knotenrechner bezeichnet man als *intelligenten Aktuator.* Auf dem Markt werden intelligente Aktuatoren häufig als kompakte Baueinheiten, vorzugsweise mit einer Schnittstelle zu einem standardisierten Echtzeitkommunikationssystem angeboten.

Während im Normalbetrieb Alarme relativ selten auftreten, kann ein gravierender Fehler in einer Anlage eine große Menge (einen *Alarmsturm,* siehe [1]) von nahezu gleichzeitigen Alarmereignissen auslösen.

Die technische Herausforderung beim Entwurf eines Alarmsystems liegt in der Anforderung, im *Normalbetrieb* das Kommunikationssystem möglichst wenig zu belasten und im Falle eines Alarmsturms die exakten Zeitpunkte aller auftretenden Alarme innerhalb einer kurzen vorgegebenen Echtzeitschranke zuverlässig an die Alarmzentrale melden zu können.

Es ist eine Aufgabe der Erfindung, eine Lösung für dieses Problem anzugeben.

Diese Aufgabe wird mit einem eingangs erwähnten Verfahren und Computersystem dadurch gelöst, dass erfindungsgemäß das Computersystem intelligente Alarmsensoren umfasst oder intelligente Alarmsensoren dem Computersystem zugeordnet sind, und wobei
ein *intelligenter Alarmsensor* zwei Typen von zeitgesteuerten Nachrichten aussendet, *Alarmnachrichten* mit einer *a priori* vorgegebenen Alarmtransportperiode, und *Fehlererkennungsnachrichten* mit einer *a priori* vorgegebenen Fehlererkennungsperiode, und wobei in einer Alarmnachricht die Zeitstempel des Auftretens von *Alarmereignissen* in einem *Alarm-Beobachtungsintervall* enthalten sind, wobei das Alarm-Beobachtungsintervall unmittelbar vor dem Senden der Alarmnachricht endet und *mindestens doppelt so lang ist* wie die Alarmtransportperiode, und wo eine Alarmnachricht nur gesendet wird, wenn mindestens ein Zeitstempel eines Alarmereignisses in der Alarmnachricht enthalten ist, und wobei in den periodischen Fehlererkennungsnachrichten die *aktuellen Zustände aller Alarme,* die unmittelbar vor dem Senden der Fehlererkennungsnachricht aktiv sind, enthalten sind.

Erfindungsgemäß wird festgelegt, dass ein *intelligenter Alarmsensor* zwei Typen von zeitgesteuerten Nachrichten aussendet, *Alarmnachrichten* mit einer *a priori* vorgegebenen Alarmtransportperiode und *Fehlererkennungsnachrichten* mit einer *a priori* vorgegebenen Fehlererkennungsperiode.

Die Fehlererkennungsperiode ist vorzugsweise länger, insbesondere deutlich länger als die Alarmtransportperiode.

Vorteilhafte Ausgestaltungen des erfindungsgemäßen Verfahrens und Computersystems, insbesondere Echtzeitcomputersystem, sind im Folgenden beschrieben, wobei diese Merkmale jeweils alleine für sich oder in beliebiger Kombination mit einem oder mehreren der weiteren Merkmale vorgesehen sein können:
- die Position des Zeitstempels eines Alarmereignisses in einer Alarmnachricht bestimmt die Bedeutung des Alarmereignisses;
- der Sendzeitpunkt einer Alarmnachricht legt die *Epoche* für die Zeitstempel der Alarmereignisse, die in dieser *Alarmnachricht* enthalten sind, fest, wobei die Zeitstempel der Alarmereignisse in Bezug auf diese Epoche ausgedrückt werden;
- die globale Zeit des Sendzeitpunkt einer sporadische Alarmnachricht ist in dieser Alarmnachricht enthalten;
- die *Zeitpunkte des Sendens* von mehreren Alarmnachrichten, die zu der selben Verteilereinheit gesendet werden, sind derart synchronisiert, dass die Alarmnachrichten *gleichzeitig* bei der Verteilereinheit eintreffen, und wobei die Inhalte der mehreren gleichzeitig eintreffenden Alarmnachrichten von der Verteilereinheit in eine *neue Alarmnachricht* zusammengefasst und gegebenenfalls weiter gesendet werden;
- die *Authentizität und Integrität des Dateninhalts* einer Alarmnachricht ist durch eine elektronische Signatur abgesichert, und diese Signatur wird in der *folgenden* Alarmnachricht übertragen;
- die Kommunikation wird zwischen den Komponenten durch das TT-Ethernet Protokoll geregelt.

In einer Alarmnachricht sind die Zeitstempel des Auftretens der *Alarmereignisse* im unmittelbar vorangegangenen *Alarmbeobachtungsintervall* enthalten. Das *a priori* festgelegte Alarmbeobachtungsintervall definiert ein Zeitintervall, in dem Alarmereignisse beobachtet werden. Das Alarmbeobachtungsintervall endet unmittelbar vor dem Senden einer Alarmnachricht und ist mindestens doppelt so lang ist wie die Alarmtransportperiode. Durch diese Längenanforderung wird sichergestellt, dass ein auftretendes Alarmereignis in mindestens zwei Alarmnachrichten enthalten ist und somit der Ausfall einer Alarmnachricht toleriert werden kann.

Der *a priori* geplante Zeitpunkt des Sendens einer Alarmnachricht legt die *Epoche* [2, p.56], das ist der Referenzpunkt für die Zeitmessung für die Zeitstempel der in der Alarmnachricht enthaltenen Alarmereignisse, fest. Durch diese Festlegung der Epoche wird die erforderliche Länge der Zeitstempel der in der Alarmnachricht enthaltenen Alarmereignisse minimiert.

Wenn z.B. die Granularität der globalen Zeit 1 µsec, die Alarmtransportperiode 1 msec und das *Alarmbeobachtungsintervall 3 msec* beträgt, so kann der Zeitstempel eines Alarmereignisses in ein 12 bit Feld kodiert werden.

Die Bedeutung eines Zeitstempels wird aus der vorgegebenen Position des Zeitstempels eines Alarmereignisses in der Alarmnachricht abgeleitet.

Wenn z.B. ein intelligenter Alarmsensor 100 unterschiedliche Alarme beobachten kann, so hat das Datenfeld der entsprechenden Alarmnachricht eine Länge von 1200 bit, das sind 150 Byte.

Vorzugsweise wird eine Alarmnachricht nur gesendet, wenn mindestens ein Zeitstempel eines Alarmereignisses in der Alarmnachricht enthalten ist. Wenn also im

*Alarmbeobachtungsintervall* kein neuer Alarm aufgetreten ist, so wird keine Alarmnachricht gesendet.

Wenn z.B. ein TTEthernet Protokoll zur Datenübertragung eingesetzt wird, so kann die ungenutzte Bandbreite im *Normalbetrieb,* d.h. es treten keine Alarme auf, zum Transport von ereignisgesteuerten Ethernet Nachrichten genutzt werden.

Wenn in der Alarmzentrale während eines längeren Zeitintervalls keine Alarmnachricht eintrifft, so kann nicht entschieden werden, ob in diesem Zeitintervall *keine Alarme* aufgetreten sind oder ob der *intelligente Alarmsensor ausgefallen ist.* Aus diesem Grund sendet jeder intelligente Alarmsensor periodisch eine *Fehlererkennungsnachricht* mit einer *a priori* vorgegebenen Fehlererkennungsperiode. Ein Ausfall des intelligenten Alarmsensors wird somit in der Alarmzentrale innerhalb einer vorgegebenen Fehlerlatenz erkannt. Im Datenfeld der Fehlererkennungsnachricht ist der vor dem Sendezeitpunkt beobachtete *Zustand* jedes Alarms angeführt.

Im Folgenden wird die Erfindung an einem Beispiel an Hand der Zeichnung näher erläutert. In dieser zeigt
Fig. 1 den zeitlichen Ablauf eines Alarmsignals,
Fig. 2 eine Folge von Alarmnachrichten und Alarmbeobachtungsintervallen, und
Fig. 3 die Netzwerktopologie eines beispielhaften verteilten Computersystems.

Im Folgenden wird zwischen den Begriffen *Alarm, Alarmereignis, Alarmzustand* und *Aktivintervall des Alarms* unterschieden. Der Begriff *Alarm* bezeichnet ein wohldefiniertes binäres Signal, das einen gefährlichen oder anomalen Zustand anzeigt. Den Beginn eines *Alarmzustands* bezeichnet man als *Alarmereignis,* die Dauer des Alarmzustands als *Aktivintervall des Alarms.* Den minimalen Abstand zwischen zwei Alarmereignissen, die sich auf denselben Alarm beziehen, bezeichnet man als MINT (Minimal Interval). Ein oder mehrere Alarmereignisse werden in einer *Alarmnachricht* von einem *intelligenten Alarmsensor* zu einer Alarmzentrale transportiert.

Wenn z.B. in einem Kessel der beobachtete Druck zu einem Zeitpunkt über eine definierte Grenze steigt, so spricht man von einem *Alarmereignis des Druckalarms* bezogen auf diesen Zeitpunkt und diesen konkreten Kessel. Der Alarmzustand bleibt erhalten bis entweder der Druck sinkt oder der Alarm zurückgesetzt wird.

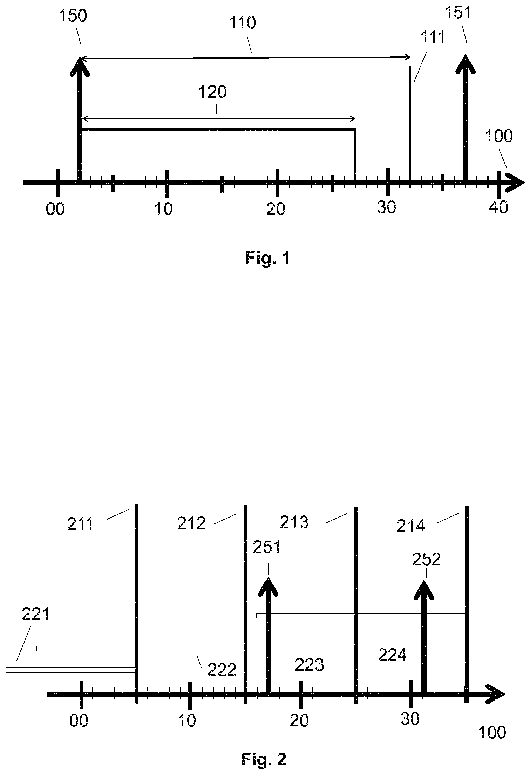

Auf der Abszisse der Figur 1 ist das Fortschreiten der Zeit veranschaulicht. Die Ticks der globalen Zeit sind auf der Zeitachse **100** von 00 bis 40 eingetragen. In Figur 1 tritt zum Zeitpunkt 02 das *Alarmereignis* **150** eines Alarms auf. Zum Zeitpunkt 27 wird dieser Alarm zurückgesetzt. Im Intervall **120,** das ist zwischen den Ticks 02 und 27, dem *Aktivintervall des Alarms,* ist dieser Alarm im Zustand *aktiv.* Da der zeitliche Minimalabstand (MINT) **110** zwischen zwei Alarmereignissen dieses Alarms 30 Ticks beträgt, kann das nächste Alarmereignis dieses Alarms erst nach dem Zeitpunkt 32 (Linie **111),** z.B. als Alarmereignis **151** zum Zeitpunkt 37, auftreten.

Figur 2 zeigt vier Zeitpunkte 05, 15, 25 und 35, zu denen die vier Alarmnachrichten **211, 212, 213, 214** gesendet werden können, und die zugehörigen *Alarmbeobachtungsintervalle.* Zum Zeitpunkt 05 wird am Ende des Alarmbeobachtungsintervalls **221** die Alarmnachricht **211** gesendet. Zum Zeitpunkt 15 wird am Ende des Alarmbeobachtungsintervalls **222** die Alarmnachricht **212** gesendet. Zum Zeitpunkt 25 wird am Ende des Alarmbeobachtungsintervalls **223** die Alarmnachricht **213** gesendet. Zum Zeitpunkt 35 wird am Ende des Alarmbeobachtungsintervalls **224** die Alarmnachricht **214** gesendet.

Der Zeitstempel des Alarmereignisses **251,** das zum Zeitpunkt 17 auftritt, wird in den beiden Alarmnachrichten **213** und **214,** die zu den Zeitpunkten 25 und 35 gesendet werden, transportiert. Das Alarmereignis **252** ist nur in der zum Zeitpunkt 35 gesendeten Alarmnachricht enthalten. In der Alarmnachricht **213** ist der Zeitstempel des Alarmereignisses **251** 8 Ticks, in der Alarmnachricht **214** ist der Zeitstempel das Alarmereignisses **251** 18 Ticks, und der des Alarmereignisses **252** 4 Ticks. In der folgenden (in Fig. 2 nicht ersichtlichen) Alarmnachricht, die zum Zeitpunkt 45 gesendet wird, ist das Alarmereignis **252,** nicht jedoch das Alarmereignis **251** enthalten (da es außerhalb des Beobachtungsintervalls dieser Alarmnachricht liegt). In den Alarmnachrichten **211** und **212** ist kein Alarmereignis enthalten. Deshalb werden die Alarmnachrichten **211** und **212** nicht gesendet.

Wenn in der Kommunikation das TT-Ethernet Protokoll [3] zum Einsatz kommt, so kann die frei werdende Bandbreite infolge nicht gesendeter Alarm Nachrichten zum Transport von Ereignisnachrichten verwendet werden.

Unabhängig von den Alarmnachrichten wird periodisch, z.B. mit einer Fehlererkennungsperiode von 1 Sekunde, eine zeitgesteuerte Fehlererkennungsnachricht von einem intelligenten Sensor an die Alarmzentrale gesendet, um die Funktionstüchtigkeit des intelligenten Alarmsensors zu dokumentieren. In der Fehlererkennungsnachricht ist der Zustand aller Alarme, die unmittelbar vor dem Senden der Fehlererkennungsnachricht aktiv sind, enthalten. (jeweils 1 bit pro Alarm).

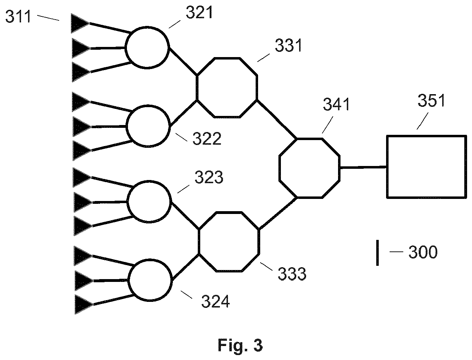

Fig. 3 zeigt eine mögliche Netzwerktopologie eines verteilten Computersystems. Die schwarzen Dreiecke **311** stellen die Alarmquellen dar, die von vier intelligenten Alarmsensoren **321, 322, 323** und **324** beobachtet werden.

Der intelligente Alarmsensor **321** sendet seine Alarmnachrichten über die Verteilereinheit **331** und **341** an die Alarmzentrale **351.** Der intelligente Alarmsensor **322** sendet seine Alarmnachrichten über die Verteilereinheit **331** und **341** an die Alarmzentrale **351.** Der intelligente Alarmsensor **323** sendet seine Alarmnachrichten über die Verteilereinheit **333** und **341** an die Alarmzentrale **351.** Der intelligente Alarmsensor **324** sendet seine Alarmnachrichten über die Verteilereinheit **333** und **341** an die Alarmzentrale **351.**

Vorzugsweise werden die *Zeitpunkte des Sendens* von mehreren Alarmnachrichten, die zur selben Verteilereinheit gesendet, derart synchronisiert, dass die Alarmnachrichten *gleichzeitig* bei der Verteilereinheit eintreffen, so dass die Verteilereinheit die Inhalte mehrerer eintreffender Nachrichten in eine einzige neue Nachricht kopieren kann.

Zum Beispiel treffen die Alarmnachrichten von den intelligenten Alarmsensoren **321** und **322** gleichzeitig bei der Verteilereinheit **331** ein. Die Verteilereinheit **331** packt die Inhalte dieser beiden eintreffenden Nachrichten in eine neue Alarmnachricht mit einem Datenfeld, dessen Länge sich aus der Summe der Datenfelder der empfangenen Alarmnachrichten ergibt. Die Verteilereinheit **333** verhält sich analog. In der Folge treffen die Alarmnachrichten von Verteilereinheiten **331** und **333** gleichzeitig bei der Verteilereinheit **341** ein. Die Verteilereinheit **341** packt die Inhalte dieser beiden eintreffenden Nachrichten in eine neue Alarmnachricht mit einem Datenfeld, dessen Länge sich aus der Summe der Datenfelder der empfangenen Alarmnachrichten ergibt, und sendet diese Nachricht an die Alarmzentrale **351.** Durch diesen Vorgang wird die Anzahl der Alarmnachrichten reduziert, was zu einer Entlastung des Kommunikationssystems führt.

Die *Authentizität und Integrität des Dateninhalts* einer Alarmnachricht kann durch eine elektronische Signatur abgesichert werden. Vorzugsweise wird die elektronische Signatur erst in der *folgenden* Alarmnachricht übertragen, um eine Verzögerung der Alarmmeldung zu vermeiden.

### Zitierte Literatur:

[1] WO 2012085744. Aoun, M. et al. Device, system and method for handling alarm messages storms in a communication network*.*
[2] Kopetz, H. Real-Time Systems - Design Principles for Distributed Embedded Applications. Springer Verlag 2011.
[3] SAE Standard AS6802 von TT Ethernet. URL: http://standards.sae.org/as6802

## Patentansprüche

1. Verfahren zum zuverlässigen Transport von Alarmnachrichten in einem verteilten Computersystem, welches Computersystem Komponenten, insbesondere eine Vielzahl von Komponenten, umfasst, wobei es sich bei den Komponenten um Knotenrechner, Verteilereinheiten, Sensoren, vorzugsweise intelligente Sensoren und Aktuatoren, vorzugsweise intelligente Aktuatoren handelt, und wobei alle Komponenten Zugriff auf eine *globale Zeit* bekannter Präzision haben, und wobei die Knotenrechner, intelligenten Sensoren und intelligenten Aktuatoren über die Verteilereinheiten Nachrichten austauschen,
**dadurch gekennzeichnet, dass**
das Computersystem intelligente Alarmsensoren umfasst oder intelligente Alarmsensoren dem Computersystem zugeordnet sind, und wobei
ein *intelligenter Alarmsensor* zwei Typen von zeitgesteuerten Nachrichten aussendet, *Alarmnachrichten* mit einer *a priori* vorgegebenen Alarmtransportperiode, und *Fehlererkennungsnachrichten* mit einer *a priori* vorgegebenen Fehlererkennungsperiode, und wobei in einer Alarmnachricht die Zeitstempel des Auftretens von *Alarmereignissen* in einem *Alarm-Beobachtungsintervall* enthalten sind, wobei das Alarm-Beobachtungsintervall unmittelbar vor dem Senden der Alarmnachricht endet und *mindestens doppelt so lang ist* wie die Alarmtransportperiode, und wo eine Alarmnachricht nur gesendet wird, wenn mindestens ein Zeitstempel eines Alarmereignisses in der Alarmnachricht enthalten ist, und wobei in den periodischen Fehlererkennungsnachrichten die *aktuellen Zustände aller Alarme,* die unmittelbar vor dem Senden der Fehlererkennungsnachricht aktiv sind, enthalten sind.

2. Verfahren nach Anspruch **1,dadurch gekennzeichnet, dass** die Position des Zeitstempels eines Alarmereignisses in einer Alarmnachricht die Bedeutung des Alarmereignisses bestimmt.

3. Verfahren nach Anspruch 1 oder 2, **dadurch gekennzeichnet, dass** der Sendzeitpunkt einer Alarmnachricht die *Epoche* für die Zeitstempel der Alarmereignisse, die in dieser *Alarmnachricht* enthalten sind, festlegt, wobei die Zeitstempel der Alarmereignisse in Bezug auf diese Epoche ausgedrückt werden.

4. Verfahren nach einem der Ansprüche 1 bis 3, **dadurch gekennzeichnet, dass** die globale Zeit des Sendzeitpunkts einer sporadische Alarmnachricht in dieser Alarmnachricht enthalten ist.

5. Verfahren nach einem der Ansprüche 1 bis 4, **dadurch gekennzeichnet, dass** die *Zeitpunkte des Sendens* von mehreren Alarmnachrichten, die zu der selben Verteilereinheit gesendet werden, derart synchronisiert sind, dass die Alarmnachrichten *gleichzeitig* bei der Verteilereinheit eintreffen, und wobei die Inhalte der mehreren gleichzeitig eintreffenden Alarmnachrichten von der Verteilereinheit in eine *neue Alarmnachricht* zusammengefasst und gegebenenfalls weiter gesendet werden.

6. Verfahren nach einem der Ansprüche 1 bis 5, **dadurch gekennzeichnet, dass** die *Authentizität und Integrität des Dateninhalts* einer Alarmnachricht durch eine elektronische Signatur abgesichert ist, und dass diese Signatur in der *folgenden* Alarmnachricht übertragen wird.

7. Verfahren nach einem der Ansprüche 1 bis 6, **dadurch gekennzeichnet, dass** die Kommunikation zwischen den Komponenten durch das TT-Ethernet Protokoll geregelt wird.

8. Verteiltes Computersystem, welches Computersystem Komponenten, insbesondere eine Vielzahl von Komponenten, umfasst, wobei es sich bei den Komponenten um Knotenrechner, Verteilereinheiten, Sensoren, vorzugsweise intelligente Sensoren und Aktuatoren, vorzugsweise intelligente Aktuatoren handelt, und wobei alle Komponenten Zugriff auf eine *globale Zeit* bekannter Präzision haben, und wobei die Knotenrechner, intelligenten Sensoren und intelligenten Aktuatoren über die Verteilereinheiten Nachrichten austauschen,
**dadurch gekennzeichnet, dass**
das Computersystem intelligente Alarmsensoren umfasst oder intelligente Alarmsensoren dem Computersystem zugeordnet sind, und wobei
zum zuverlässigen Transport von Alarmnachrichten ein *intelligenter Alarmsensor* zwei Typen von zeitgesteuerten Nachrichten aussendet, *Alarmnachrichten* mit einer *a priori* vorgegebenen Alarmtransportperiode, und *Fehlererkennungsnachrichten* mit einer *a priori* vorgegebenen Fehlererkennungsperiode, und wobei in einer Alarmnachricht die Zeitstempel des Auftretens von *Alarmereignissen* in einem *Alarm-Beobachtungsintervall* enthalten sind, wobei das Alarm-Beobachtungsintervall unmittelbar vor dem Senden der Alarmnachricht endet und *mindestens doppelt so lang ist* wie die Alarmtransportperiode, und wo eine Alarmnachricht nur gesendet wird, wenn mindestens ein Zeitstempel eines Alarmereignisses in der Alarmnachricht enthalten ist, und wobei in den periodischen Fehlererkennungsnachrichten die *aktuellen Zustände aller Alarme,* die unmittelbar vor dem Senden der Fehlererkennungsnachricht aktiv sind, enthalten sind.

9. Computersystem nach Anspruch **8,dadurch gekennzeichnet, dass** die Position des Zeitstempels eines Alarmereignisses in einer Alarmnachricht die Bedeutung des Alarmereignisses bestimmt.

10. Computersystem nach Anspruch 8 oder 9, **dadurch gekennzeichnet, dass** der Sendzeitpunkt einer Alarmnachricht die *Epoche* für die Zeitstempel der Alarmereignisse, die in dieser *Alarmnachricht* enthalten sind, festlegt, wobei die Zeitstempel der Alarmereignisse in Bezug auf diese Epoche ausgedrückt werden.

11. Computersystem nach einem der Ansprüche 8 bis 10, **dadurch gekennzeichnet, dass** die globale Zeit des Sendzeitpunkt einer sporadische Alarmnachricht in dieser Alarmnachricht enthalten ist.

12. Computersystem nach einem der Ansprüche 8 bis 11, **dadurch gekennzeichnet, dass** die *Zeitpunkte des Sendens* von mehreren Alarmnachrichten, die zu der selben Verteilereinheit gesendet werden, derart synchronisiert sind, dass die Alarmnachrichten *gleichzeitig* bei der Verteilereinheit eintreffen, und wobei die Inhalte der mehreren gleichzeitig eintreffenden Alarmnachrichten von der Verteilereinheit in eine *neue Alarmnachricht* zusammengefasst und gegebenenfalls weiter gesendet werden.

13. Computersystem nach einem der Ansprüche 8 bis 12, **dadurch gekennzeichnet, dass** die *Authentizität und Integrität des Dateninhalts* einer Alarmnachricht durch eine elektronische Signatur abgesichert ist, und dass diese Signatur in der *folgenden* Alarmnachricht übertragen wird.

14. Computersystem nach einem der Ansprüche 8 bis 13, **dadurch gekennzeichnet, dass** die Kommunikation zwischen den Komponenten durch das TT-Ethernet Protokoll geregelt wird.

## Claims

1. A method for the reliable transportation of alarm messages in a distributed computer system, which computer system comprises components, in particular a plurality of components, wherein the components include node machines, distributor units, sensors, preferably intelligent sensors and actuators, preferably intelligent actuators, and wherein all components have access to a global time of known precision and wherein the node machines, intelligent sensors and intelligent actuators exchange messages via the distributor units,
**characterized in that**
the computer system comprises intelligent alarm sensors or intelligent alarm sensors are assigned to the computer system and wherein
an intelligent alarm sensor transmits two types of time-triggered messages, alarm messages with an a priori predefined alarm transport period, and error detection messages with an a priori predefined error detection period and wherein in an alarm message the time stamps of the occurrence of alarm events are contained in an alarm observation interval, wherein the alarm observation interval ends immediately prior to transmission of the alarm message and is at least twice as long as the alarm transport period and where an alarm message is only sent if at least one time stamp of an alarm event is contained in the alarm message and wherein the current states of all alarms which are active immediately before the error detection message is transmitted are contained in the periodic error detection messages.

2. The method according to claim 1, **characterized in that** the position of the time stamp of an alarm event in an alarm message determines the significance of the alarm event.

3. The method according to claim 1 or 2, **characterized in that** the transmission instant of an alarm message determines the epoch for the time stamp of the alarm events which are contained in this alarm message, wherein the time stamp of the alarm events are expressed in relation to this epoch.

4. The method according to one of claims 1 to 3, **characterized in that** the global time of the transmission instant of a sporadic alarm message is contained in this alarm message.

5. The method according to one of claims 1 to 4, **characterized in that** the instants of the transmission are synchronized by a plurality of alarm messages which are transmitted to the same distributor unit in such a manner that the alarm messages arrive in the distributor unit simultaneously and wherein the contents of the multiple simultaneously arriving alarm messages are combined by the distributor unit into a new alarm message and transmitted on where necessary.

6. The method according to one of claims 1 to 5, **characterized in that** the authenticity and integrity of the data content of an alarm message is secured by an electronic signature and that this signature is transferred in the following alarm message.

7. The method according to one of claims 1 to 6, **characterized in that** communication between the components is triggered by the TTEthernet protocol.

8. A distributed computer system which comprises components, in particular a plurality of components, wherein the components are node machines, distributor units, sensors, preferably intelligent sensors and actuators, preferably intelligent actuators, and wherein all components have access to a global time of known precision and wherein the node machines, intelligent sensors and intelligent actuators exchange messages via the distributor units,
**characterized in that**
the computer system comprises intelligent alarm sensors or intelligent alarm sensors are assigned to the computer system and wherein
for the reliable transport of alarm messages an intelligent alarm sensor transmits two types of time-triggered messages, alarm messages with an a priori predefined alarm transport period and error detection messages with an a prior predefined error detection period, and wherein the time stamps of the occurrence of alarm events in an alarm observation interval are contained in an alarm message, wherein the alarm observation interval ends immediately before the transmission of the alarm message and is at least twice as long as the alarm transport period and where an alarm message is only transmitted when at least one time stamp of an alarm event is contained in the alarm message and wherein the current states of all alarms which are active immediately before the transmission of the error detection message are contained in the periodic error detection messages.

9. The computer system according to claim 8, **characterized in that** the position of the time stamp of an alarm event in an alarm message determines the significance of the alarm event.

10. The computer system according to claim 8 or 9, **characterized in that** the transmission instant of an alarm message determines the epoch for the time stamp of the alarm events which are contained in this alarm message, wherein the time stamps of the alarm events are expressed in relation to this epoch.

11. The computer system according to one of claims 8 to 10, **characterized in that** the global time of the transmission instant of a sporadic alarm message is contained in this alarm message.

12. The computer system according to one of claims 8 to 11, **characterized in that** the instants of the transmission of multiple alarm messages which are transmitted to the same distributor unit are synchronized in such a manner that the alarm messages occur simultaneously with the distributor unit and wherein the contents of the multiple simultaneously arriving alarm messages are combined by the distributor unit into a new alarm message and transmitted on where necessary.

13. The computer system according to one of claims 8 to 12, **characterized in that** the authenticity and integrity of the data content of an alarm message is secured by an electronic signature and that this signature is transferred in the following alarm message.

14. The computer system according to one of claims 8 to 13, **characterized in that** the communication between the components is triggered by the TTEthernet protocol.

## Revendications

1. Procédé pour le transport fiable de messages d'alarme dans un système informatique distribué, lequel système informatique comporte des composants, en particulier une pluralité de composants, dans lequel les composants sont des calculateurs nodaux, des unités de distribution, des capteurs, de préférence des capteurs intelligents, et des actionneurs, de préférence des actionneurs intelligents, et dans lequel tous les composants ont accès à un *temps global* de précision connue, et dans lequel les calculateurs nodaux, les capteurs intelligents et les actionneurs intelligents échangent des messages par l'intermédiaire des unités de distribution,
**caractérisé par le fait que**
le système informatique comporte des capteurs d'alarme intelligents ou des capteurs d'alarme intelligents sont associés au système informatique, et dans lequel
un *capteur d'alarme intelligent* envoie deux types de messages à déclenchement temporel, des *messages d'alarme* ayant une période de transport d'alarme prescrite *a priori,* et des *messages de détection d'erreur* ayant une période de détection d'erreur prescrite *a priori,* et dans lequel, dans un message d'alarme, les estampilles temporelles de l'occurrence *d'événements d'alarme* sont contenues dans un *intervalle de surveillance d'alarme,* dans lequel l'intervalle de surveillance d'alarme se termine immédiatement avant l'envoi du message d'alarme et *est au moins deux fois plus long* que la période de transport d'alarme, et où un message d'alarme est envoyé seulement si au moins une estampille temporelle d'un événement d'alarme est contenue dans le message d'alarme, et dans lequel, dans les messages de détection d'erreur périodiques, sont contenus *les états actuels de toutes les alarmes* qui sont actives immédiatement avant l'envoi du message de détection d'erreur.

2. Procédé selon la revendication 1, **caractérisé par le fait que** la position de l'estampille temporelle d'un événement d'alarme dans un message d'alarme détermine l'importance de l'événement d'alarme.

3. Procédé selon l'une des revendications 1 ou 2, **caractérisé par le fait que** le moment d'envoi d'un message d'alarme détermine les *époques* pour l'estampille temporelle des événements d'alarme qui sont contenus dans ce *message d'alarme,* les estampilles temporelles des événements d'alarme étant exprimées par rapport à ces époques.

4. Procédé selon l'une des revendications 1 à 3, **caractérisé par le fait que** le temps global du moment d'envoi d'un message d'alarme sporadique est contenu dans ce message d'alarme.

5. Procédé selon l'une des revendications 1 à 4, **caractérisé par le fait que** les *moments de l'envoi* de plusieurs messages d'alarme, qui sont envoyés à la même unité de distribution, sont synchronisés de telle sorte que les messages d'alarme arrivent *simultanément* à l'unité de distribution, et dans lequel les contenus des différents messages d'alarme arrivant simultanément sont regroupés en un *nouveau message d'alarme* à partir de l'unité de distribution et le cas échéant sont retransmis.

6. Procédé selon l'une des revendications 1 à 5, **caractérisé par le fait que** *l'authenticité et l'intégrité du contenu de données* d'un message d'alarme sont protégées par une signature électronique, et **par le fait que** cette signature est transmise dans le message d'alarme *suivant.*

7. Procédé selon l'une des revendications 1 à 6, **caractérisé par le fait que** la communication entre les composants est régie par le protocole TT-Ethernet.

8. Système informatique distribué, lequel système informatique comporte des composants, en particulier une pluralité de composants, dans lequel les composants sont des calculateurs nodaux, des unités de distribution, des capteurs, de préférence des capteurs intelligents, et des actionneurs, de préférence des actionneurs intelligents, et dans lequel tous les composants ont accès à un *temps global* de précision connue, et dans lequel les calculateurs nodaux, les capteurs intelligents et les actionneurs intelligents échangent des messages par l'intermédiaire des unités de distribution,
**caractérisé par le fait que**
le système informatique comporte des capteurs d'alarme intelligents ou des capteurs d'alarme intelligents sont associés au système informatique, et dans lequel
pour le transport fiable de messages d'alarme, un *capteur d'alarme intelligent* envoie deux types de messages à déclenchement temporel, des *messages d'alarme* ayant une période de transport d'alarme prescrite *a priori,* et des *messages de détection d'erreur* ayant une période de détection d'erreur prescrite *a priori,* et dans lequel, dans un message d'alarme, les estampilles temporelles de l'occurrence *d'événements d'alarme* sont contenues dans un *intervalle de surveillance d'alarme,* dans lequel l'intervalle de surveillance d'alarme se termine immédiatement avant l'envoi du message d'alarme et est *au moins deux fois plus long* que la période de transport d'alarme, et où un message d'alarme est envoyé seulement si au moins une estampille temporelle d'un événement d'alarme est contenue dans le message d'alarme, et dans lequel, dans les messages de détection d'erreur périodiques, sont contenus les *états actuels de toutes les alarmes* qui sont actives immédiatement avant l'envoi du message de détection d'erreur.

9. Système informatique selon la revendication 8, **caractérisé par le fait que** la position de l'estampille temporelle d'un événement d'alarme dans un message d'alarme détermine l'importance de l'événement d'alarme.

10. Système informatique selon l'une des revendications 8 ou 9, **caractérisé par le fait que** le moment d'envoi d'un message d'alarme détermine les *époques* pour l'estampille temporelle des événements d'alarme qui sont contenus dans ce *message d'alarme,* les estampilles temporelles des événements d'alarme étant exprimées par rapport à ces époques.

11. Système informatique selon l'une des revendications 8 à 10, **caractérisé par le fait que** le temps global du moment d'envoi d'un message d'alarme sporadique est contenu dans ce message d'alarme.

12. Système informatique selon l'une des revendications 8 à 11, **caractérisé par le fait que** les *moments de l'envoi* de plusieurs messages d'alarme, qui sont envoyés à la même unité de distribution, sont synchronisés de telle sorte que les messages d'alarme arrivent *simultanément* à l'unité de distribution, et dans lequel les contenus des différents messages d'alarme arrivant simultanément sont regroupés en un *nouveau message d'alarme* à partir de l'unité de distribution et le cas échéant sont retransmis.

13. Système informatique selon l'une des revendications 8 à 12, **caractérisé par le fait que** *l'authenticité et l'intégrité du contenu de données* d'un message d'alarme sont protégées par une signature électronique, et **par le fait que** cette signature est transmise dans le message d'alarme *suivant.*

14. Système informatique selon l'une des revendications 8 à 13, **caractérisé par le fait que** la communication entre les composants est régie par le protocole TT-Ethernet.
